# EUROPÄISCHE PATENTANMELDUNG

(11) **EP 4 806 559 A2**
(43) Veröffentlichungstag der Anmeldung: **16.09.2026**
(21) Anmeldenummer: 26196526.3
(22) Anmeldetag: 28.04.2020
(51) Int. Cl.: B05B 15/18

(54) **DRUCKERDÜSE ZUR VERARBEITUNG VON 3D-DRUCKMATERIAL**

(30) Priorität: 24.05.2019 DE 102019113993
(62) Dokumentnummer(n) der früheren Anmeldung(en) nach Art. 76 EPÜ: 20725075.4 / 3 976 277
(71) Anmelder: Gühring KG, 72458 Albstadt (DE)
(72) Erfinder: SAGR, Andreas, 72458 Albstadt (DE); STEVANOVIC, Zarko, 72458 Albstadt (DE); HARTMANN, Peter, 72479 Straßberg (DE); FECHNER, Tobias, 72458 Albstadt (DE)
(74) Vertreter: Winter, Brandl - Partnerschaft mbB

(57) **Zusammenfassung**

Es ist eine FDM-3D-Druckerdüse (1) zum 3D-Drucken mit 3D-Druckmaterial-Filamenten bereitgestellt, wobei die FDM-3D-Druckerdüse (1) einen Düsenkörper (2) und einen Düseneinsatz (3) umfasst, wobei der Düsenkörper (2) in einem hinteren Teil eine gewindeförmige Aufnahme (22) zum Einschrauben in eine 3D-Druckervorrichtung und in einem vorderen Teil einen Austrittsabschnitt (21) umfasst, der an der Vorderspitze den Düseneinsatz (3) umfasst, wobei der Düsenkörper (2) aus einem Vollhartmetall, Metall oder Messing ist, und der Düseneinsatz (3) vollständig aus einem PKD (Polykristalliner Diamant) Material ist, wobei die FDM-3D-Druckerdüse (1) einen durchlaufenden Kanal (5) zum Transport des 3D-Druckmaterial-Filaments hat, der einen im Düsenkörper (2) ausgebildeten zylindrischen Kanalabschnitt und einen im Düseneinsatz (3) ausgebildeten Kanalabschnitt aufweist, der den im Düsenkörper (2) ausgebildeten Kanalabschnitt fortsetzt und in einer Austrittsöffnung des Düseneinsatzes (3) mündet und der aus einem in Richtung der Austrittsöffnung verjüngten Teil und einem an den verjüngten Teil anschließenden in die Austrittsöffnung mündenden zylindrischen Teil besteht.

## Beschreibung

Die Erfindung betrifft eine Druckerdüse zur Verarbeitung von 3D-Druckmaterial gemäß dem unabhängigen Anspruch.

Die Erfindung befasst sich mit einer Werkzeugneuentwicklung im Bereich 3D- Druckerdüsen. 3D-Druckerdüsen sind das wichtigste Bauteil bei einem 3D-Drucker, weil durch diese das Filament positioniert wird und damit die Druckgeschwindigkeit und die Druckqualität maßgeblich bestimmt werden.

Durch die Druckerdüse bzw. Düse (Nozzle) tritt beim Schmelzschichtverfahren (Fused Deposition Modeling (FDM) bzw. Fused Filament Fabrication (FFF) das zu druckende 3D-Druckmaterial in schmelzflüssiger Form aus. Die Druckerdüse bestimmt mit dem Durchmesser die maximale Breite pro Linie beim Drucken sowie den Durchmesser des verwendeten Filaments

Druckerdüsen aus Messing sind aufgrund der guten Wärmeleitfähigkeit und geringen Kosten weit verbreitet.

Ein Nachteil bei 3D-Druckerdüsen aus Messing ist, dass die Düsen bei Gebrauch von Filamenten wie PEEK (Polyetheretherketon) Kunststoffen, die für den Hochtemperaturbereich sind, oder bei Einsatz von abrasiven Zusatzstoffen, wie z. B. Kohlefaser oder Borcarbid, schnell abnutzen. Durch die erzeugte stetige Reibung wird insbesondere die Düsenöffnung ausgeschliffen und die ausgeschliffene Düsenöffnung führt zu einer Verschlechterung der Qualität der Druckergebnisse.

Je nach eingesetztem Filament kann es erforderlich sein, eine Druckerdüse aus einem anderen Material einzusetzen. Es ist es bekannt Stahldüsen aus gehärtetem Stahl einzusetzen. Derartige Druckerdüsen aus Stahl können auch mit Edelsteineinsatz , zum Beispiel aus Rubin, versehen sein, um die Beständigkeit zu erhöhen und dauerhaft die Druckergebnisse zu verbessern.

Solche Druckerdüsen haben neben dem höheren Preis auch den Nachteil, dass die Temperaturleitfähigkeit im Vergleich zu Messing schlechter ist. Bei solchen Düsen mit Edelsteineinsatz ist ferner die Bruchgefahr erhöht.

Der Erfindung liegt die Aufgabe zugrunde, eine Druckerdüse zur Verarbeitung von 3D-Druckmaterial bereitzustellen, die die Nachteile im Stand der Technik überwindet und die insbesondere bei abrasiven Filamentmaterialien eine hohe Lebensdauer und gute Druckqualität gewährleistet.

Die Aufgabe wird durch eine Druckerdüse zur Verarbeitung von 3D-Druckmaterial gemäß dem unabhängigen Anspruch gelost. Vorteilhafte Ausgestaltungen bilden den Gegenstand der unabhängigen Ansprüche.

Die Erfindung umfasst eine Druckerdüse zur Verarbeitung von 3D-Druckmaterial mit einem Düsenkörper mit einer Aufnahme zur Befestigung in einer 3D-Druckervorrichtung und einem Austrittsabschnitt. Der Austrittsabschnitt umfasst einen Düseneinsatz. Der Düsenkörper ist aus einem Vollhartmetall, Metall oder Messing. Der Düseneinsatz umfasst ein PKD (Polykristalliner Diamant) Material. Das PKD-Material hat bei abrasiven Filamentmaterialien eine hohe Lebensdauer bei geringer Bruchfestigkeit. Ferner hat das PKD-Material eine hohe Wärmeleitfähigkeit.

Gemäß einem bevorzugten Aspekt ist der Düsenkörper und der Düseneinsatz separat ausgebildet. Die separate Ausgestaltung von Düsenkörper und Düseneinsatz erlaubt die Verwendung von unterschiedlichen Materialien zur Herstellung des Düsenkörpers und des Düseneinsatzes.

Besonders vorteilhaft ist der Düsenkörper und der Düseneinsatz stoffschlüssig miteinander verbunden. Die stoffschlüssige Verbindung kann durch Loten hergestellt werden, indem der Düsenkörper und der Düseneinsatz aneinandergehalten werden und auf die Verbindungsstelle ein Lot aufgebracht wird.

Gemäß einem besonders vorteilhaften Aspekt schmilzt das zur Verbindung von Düsenkörper und der Düseneinsatz eingesetzte Lotmaterial ab einer Temperatur von 500° und mehr. So kann eine temperaturbeständige Druckerdüse bereitgestellt werden, die zum Beispiel bei der Verarbeitung von PEEK-Kunststoffen einsetzbar ist.

Ein weiterer bevorzugter Aspekt sieht vor, dass der Austrittsabschnitt endseitig eine Ausnehmung umfasst. Die Ausnehmung hat eine Größe und Form, die zum Düseneinsatz zumindest abschnittsweise komplementär ausgebildet ist. Die derart ausgestaltete Ausnehmung im Austrittsabschnitt erlaubt ein einfaches Verlöten von Düsenkörper und Düseneinsatz.

Ein bevorzugter technischer Aspekt sieht vor, dass der Düseneinsatz vollständig aus einem PKD (Polykristalliner Diamant) Material ist. Dabei handelt es sich um ein gut wärmeleitendes Material, dass die Wärme vom Austrittsabschnitt zur Austrittsöffnung des Düseneinsatzes transportiert.

Vorteilhafterweise hat der Düseneinsatz eine von allen Seiten gelaserte Außenkontur. Die gelaserte Außenkontur hat bevorzugt mehrere konisch zulaufende Teilflachen.

Besonders bevorzugt hat der Düseneinsatz eine Austrittsöffnung mit 2, 3, 4, 5 oder 8 mm.

Ein anderer vorteilhafter Aspekt sieht vor, dass der Austrittsabschnitt unter einem Winkel im Bereich von 50° bis 70 °, insbesondere 60° spitz zulaufend ausgebildet ist. Diese Kontur bewirkt eine ausreichende Bewegungsfreiheit der Druckerdüse beim Aufbringen des Druckmaterials.

Vorteilhafterweise hat der Düseneinsatz eine Stirnflache mit einem Durchmesser von 1,5 mm. Die Stirnflache ist groß genug, um ausreichend Wärme an die Spitze der Druckerdüse zu transportieren und so klein, dass feine Strukturen damit druckbar sind Bevorzugt ist der Düseneinsatz zumindest abschnittsweise poliert.

Die Erfindung wird im Folgenden anhand des in den Zeichnungen dargestellten Beispiels zusätzlich erläutert.

Es zeigen:
- Fig. 1: eine perspektivische Darstellung einer Druckerdüse zur Verarbeitung von 3D-Druckmaterial gemäß einem Ausführungsbeispiel der Erfindung;
- Fig. 2: eine Schnittansicht einer ersten Variante der Druckerdüse aus Fig. 1;
- Fig. 3: eine Schnittansicht einer zweiten Variante der Druckerdüse aus Fig. 1; und
- Fig. 4: eine Vorderansicht der Druckerdüse aus Fig 1.

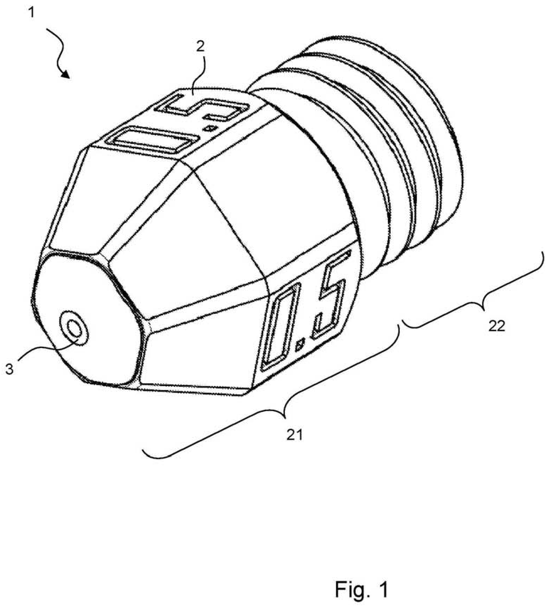

In **Fig. 1** ist eine perspektivische Ansicht einer Druckerdüse 1 gezeigt, die zur Verarbeitung von 3D-Druckmaterial an einer Druckereinrichtung (nicht dargestellt) anbringbar ist.

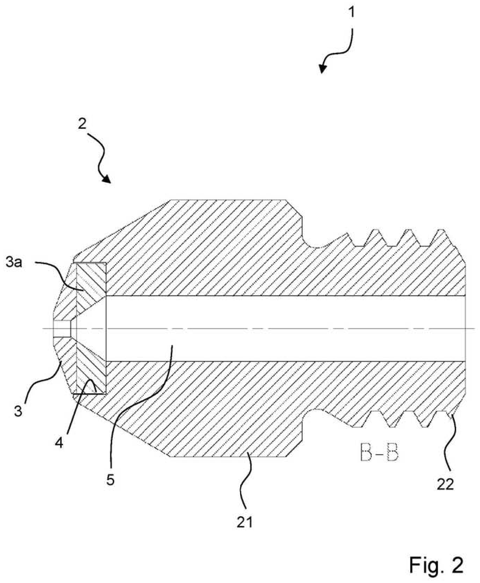

Die gezeigte Druckerdüse 1 dient zur Verarbeitung von 3D-Druckmaterial in der Form eines Filaments. Die Druckerdüse 1 hat einen Düsenkörper 2, der im hinteren Teil eine gewindeförmige Aufnahme 22 zum Einschrauben in den 3D-Drucker hat. Im vorderen Teil hat der Düsenkörper 2 einen Austrittsabschnitt 21, der einteilig mit der Aufnahme 22 ausgebildet ist. Der Austrittsabschnitt 21 umfasst an der Vorderspitze einen Düseneinsatz 3, der wie weiter unten beschrieben und in Fig. 2 dargestellt, einen im Austrittskanal und Aufnahme verlaufenden inneren Kanal fortsetzt.

Der Düsenkörper 2 und der Düseneinsatz 3 sind separat ausgebildet. Der Düsenkörper ist aus einem Vollhartmetall, Metall oder Messing. Der Düseneinsatz 3 umfasst grundsätzlich ein PKD-Material, wobei der gezeigte Düseneinsatz 3 vollständig aus einem PKD-Material ist. Das PKD Material hat bei abrasiven Filamentmaterialien eine hohe Lebensdauer bei geringer Bruchfestigkeit. Fernerhatdas PKD Material eine hohe Wärmeleitfähigkeit.

Der Düsenkörper 2 und der Düseneinsatz 3 sind stoffschlüssig in der Art einer Lotstelle miteinander verbunden Zum Einsatz bei hohen Temperaturen, ist das zur Verbindung von Düsenkörper und Düseneinsatz eingesetzte Lotmaterial derart gewählt, dass es ab einer Temperatur von 500° und mehr schmilzt. Ein Beispiel ist Silberlot. Die Öffnung in der Mitte des Düseneinsatzes 3 hat einen Durchmesser von 5 mm, wobei das gezeigte Beispiel nicht auf dieses Maß beschränkt ist. Der Düseneinsatz 3 hat eine Stirnflache mit einem Durchmesser von 1,5 mm.

Der Austrittsabschnitt 21 hat im Bereich zwischen Düseneinsatz 3 und Aufnahme 21 mehrere Flächenabschnitte, die unter einem Winkel von etwa 60° spitz zulaufend ausgebildet sind.

Der Düseneinsatz 3 ist an der Oberflache, an der Innenseite und an der Außenseite poliert.

Fig. 2 ist eine Schnittansicht einer ersten Variante der Druckerdüse 1 aus Fig. 1. Im gezeigten Querschnitt hat die Druckerdüse 1 einen durchlaufenden Kanal 5, in dem während der Verarbeitung von 3D-Druckmaterial das Filament transportiert wird.

Im rechten Teil der Darstellung hat die Druckerdüse 1 eine gewindeförmige Aufnahme 22 zum Einschrauben in den 3D-Drucker.

Im linken Teil der Darstellung hat der Düsenkörper 2 einen Austrittsabschnitt 21 der einteilig mit der Aufnahme 22 aus Vollhartmetall, Metall oder Messing ausgebildet ist.

Der Austrittsabschnitt 21 umfasst an der Vorderspitze einen Düseneinsatz 3, der den Kanal 5 zum Transport des Filaments fortsetzt. Der Düseneinsatz 3 ist in dieser Variante an einem Verbindungsstück 3a aus Vollhartmetall angeordnet.

Bei dem dargestellten Austrittsabschnitt 21 ist endseitig eine Ausnehmung 4 ausgebildet, die eine sechseckige Randform hat. Die Ausnehmung 4 hat eine Tiefe und einen lateralen Durchmesser, dass der komplementär ausgebildete Düseneinsatz 3 mit seinem Verbindungsstück 3a fast vollständig darin aufgenommen wird. Der derart komplementär ausgebildete Düseneinsatz 3 hat von allen Seiten eine gelaserte Außenkontur.

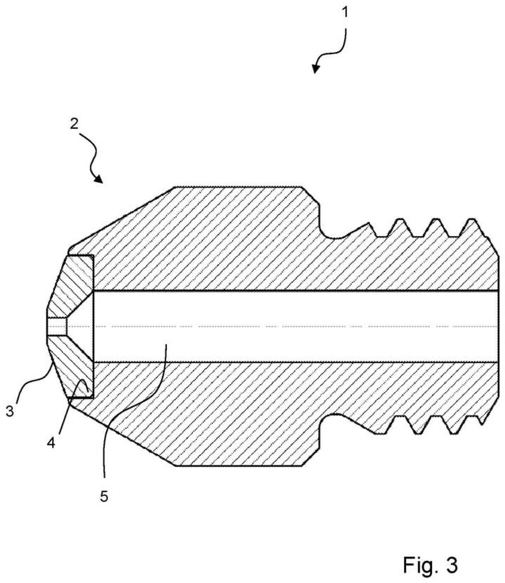

Fig. 3 eine Schnittansicht einer zweiten Variante der Druckerdüse aus Fig. 1, wobei der Düsenseinsatz 3 ohne Verbindungsstuck (siehe Fig. 3a) ausgebildet ist.

Der Austrittsabschnitt 21 umfasst an der Vorderspitze einen Düseneinsatz 3, der den Kanal 5 zum Transport des Filaments fortsetzt. Im gezeigten Beispiel ist der Düseneinsatz vollständig aus PKD.

Bei dem dargestellten Austrittsabschnitt 21 ist endseitig eine Ausnehmung 4 ausgebildet, die eine sechseckige Randform hat. Die Ausnehmung 4 hat eine Tiefe und einen lateralen Durchmesser, dass der komplementär ausgebildete Düseneinsatz 3fast vollständig darin aufgenommen wird. Der derart komplementär ausgebildete Düseneinsatz 3 hat von allen Seiten eine gelaserte Außenkontur

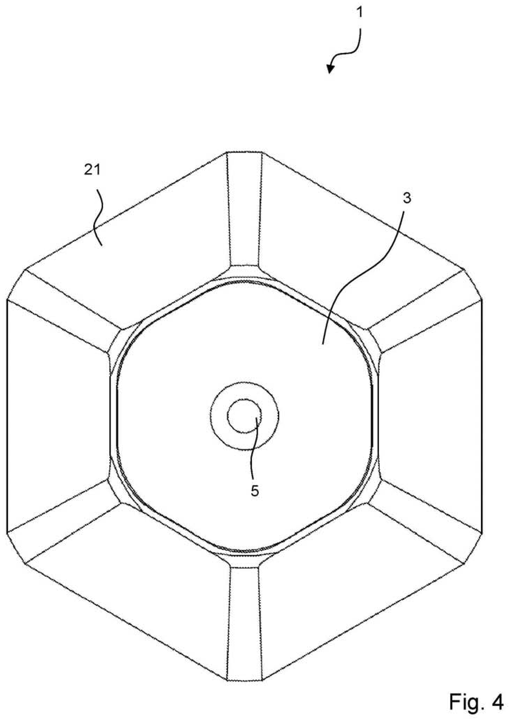

Fig. 4 ist eine Vorderansicht der Druckerdüse 1 aus Figuren 1 und 2. Der Austrittsabschnitt 21 tragt in einer Ausnehmung den Düseneinsatz 3. Der Kanal 5 dient zum Transport des Filaments.

## Patentansprüche

1. FDM-3D-Druckerdüse (1) zum 3D-Drucken mit 3D-Druckmaterial-Filamenten, wobei die FDM-3D-Druckerdüse (1) einen Düsenkörper (2) und einen Düseneinsatz (3) umfasst, wobei der Düsenkörper (2) in einem hinteren Teil eine gewindeförmige Aufnahme (22) zum Einschrauben in eine 3D-Druckervorrichtung und in einem vorderen Teil einen Austrittsabschnitt (21) umfasst, der an der Vorderspitze den Düseneinsatz (3) umfasst, wobei der Düsenkörper (2) aus einem Vollhartmetall, Metall oder Messing ist, und der Düseneinsatz (3) vollständig aus einem PKD (Polykristalliner Diamant) Material ist, wobei die FDM-3D-Druckerdüse (1) einen durchlaufenden Kanal (5) zum Transport des 3D-Druckmaterial-Filaments hat, der einen im Düsenkörper (2) ausgebildeten zylindrischen Kanalabschnitt und einen im Düseneinsatz (3) ausgebildeten Kanalabschnitt aufweist, der den im Düsenkörper (2) ausgebildeten Kanalabschnitt fortsetzt und in einer Austrittsöffnung des Düseneinsatzes (3) mündet und der aus einem in Richtung der Austrittsöffnung verjüngten Teil und einem an den verjüngten Teil anschließenden in die Austrittsöffnung mündenden zylindrischen Teil besteht.

2. FDM-3D-Druckerdüse (1) nach Anspruch 1, wobei der Düsenkörper (2) und der Düseneinsatz (3) separat ausgebildet sind.

3. FDM-3D-Druckerdüse (1) nach Anspruch 2, wobei der Düsenkörper (2) und der Düseneinsatz (3) stoffschlüssig miteinander verbunden sind.

4. FDM-3D-Druckerdüse (1) nach Anspruch 3, wobei ein zur Verbindung von Düsenkörper (2) und Düseneinsatz (3) eingesetztes Lotmaterial ab einer Temperatur von 500° und mehr schmilzt.

5. FDM-3D-Druckerdüse (1) nach einem der vorangehenden Ansprüche, wobei der Austrittsabschnitt (21) endseitig eine Ausnehmung (4) umfasst, und wobei die Ausnehmung (4) eine Größe und Form hat, die zum Düseneinsatz (3) zumindest abschnittsweise komplementär ausgebildet ist.

6. FDM-3D-Druckerdüse (1) nach einem der vorangehenden Ansprüche, wobei der Düseneinsatz (3) von allen Seiten eine gelaserte Außenkontur hat.

7. FDM-3D-Druckerdüse (1) nach einem der vorangehenden Ansprüche, wobei der Düseneinsatz (3) eine Stirnfläche mit einem Durchmesser von 1,5 mm umfasst.

8. FDM-3D-Druckerdüse (1) nach einem der vorangehenden Ansprüche, wobei der Austrittsabschnitt (21) unter einem Winkel im Bereich von 50° bis 70 °, insbesondere 60° spitz zulaufend ausgebildet ist.

9. FDM-3D-Druckerdüse (1) nach einem der vorangehenden Ansprüche, wobei der Düseneinsatz (3) zumindest abschnittsweise poliert ist.
